# FASCICULE DE BREVET EUROPEEN

(11) **EP 3 250 858 B1**
(45) Date de publication et mention de la délivrance du brevet: **03.03.2021**
(21) Numéro de dépôt: 16705231.5
(22) Date de dépôt: 25.01.2016
(51) Int. Cl.: F23R 7/00, F02C 5/12

(54) **MODULE DE COMBUSTION A VOLUME CONSTANT POUR UNE TURBOMACHINE**
VERBRENNUNGSMODUL MIT KONSTANTEM VOLUMEN FÜR EINEN TURBINENMOTOR
CONSTANT-VOLUME COMBUSTION MODULE FOR A TURBINE ENGINE

(30) Priorité: 26.01.2015 FR 1550588
(43) Date de publication de la demande: 06.12.2017
(73) Titulaire: SAFRAN, 75015 Paris (FR)
(72) Inventeur: LEYKO, Matthieu, 77550 Moissy-Cramayel (FR)
(74) Mandataire: Gevers & Orès
(86) Numéro de dépôt international: PCT/FR2016/050142
(87) Numéro de publication internationale: WO 2016/120551

(56) Documents cités:
- DE-A1- 10 347 588
- FR-A1- 2 866 676
- US-A1- 2013 236 842

## Description

L'invention se rapporte au domaine des chambres de combustion de turbomachines d'aéronef, du type à combustion à volume constant.

L'invention s'applique à tout type de turbomachine, en particulier les turboréacteurs, les turbopropulseurs, et les turbomachines à soufflantes non carénées, aussi connues sous le vocable anglo-saxon de « Open Rotor ».

### ETAT DE LA TECHNIQUE ANTERIEURE

De manière connue, la chambre de combustion d'une turbomachine d'aéronef conventionnelle fonctionne selon un cycle dit de Brayton, c'est-à-dire un cycle de combustion à pression constante. Néanmoins, pour obtenir des gains de consommation spécifique, il a été envisagé de remplacer la chambre de combustion fonctionnant selon un cycle de Brayton par une chambre de combustion fonctionnant selon un cycle de Humphrey, c'est-à-dire un cycle de combustion à volume constant ou « CVC ».

Le principe des cycles de combustion à volume constant sont connus de longue date des statoréacteurs, tel que celui décrit dans le document FR-2.866.676-A1. Ce document décrit un statoréacteur dont la chambre de combustion unique comporte une soupape rotative d'admission et une soupape rotative d'échappement.

Toutefois, le principe des cycles de combustion à volume constant n'a été que rarement appliqué aux modules de combustion destinés à alimenter une turbine d'une turbomachine.

Le document FR-2.945.316 décrit un exemple de réalisation d'une chambre de combustion CVC. La chambre comprend à l'entrée une vanne d'admission de gaz comprimé composée de deux éléments rotatifs de section sensiblement ovoïde qui sont montés tournants selon des axes parallèles entre eux et perpendiculaires à l'axe de la chambre, lesdits éléments étant capables de déterminer lorsqu'ils sont disjoints une position d'ouverture de la vanne et lorsqu'ils sont jointifs une position de fermeture de la vanne. La chambre comporte de la même manière à sa sortie une vanne d'échappement similaire capable d'osciller entre une position ouverte et une position fermée. Dans cette solution, la conception des vannes d'admission et d'échappement s'avère perfectible, en particulier en termes de robustesse et d'étanchéité, cette dernière pouvant être problématique en particulier lors de la forte mise en pression observée durant la phase de combustion, du fait de l'étanchéité perfectible des éléments de section ovoïde.

Le document US 2013/236842-A1 décrit un module de combustion de turbomachine, notamment d'aéronef, configuré pour la mise en oeuvre d'une combustion à volume constant, comportant un rotor entre deux stators, le rotor comportant une pluralité de canaux axiaux dont l'entrée ou la sortie est susceptible d'être obturée ou libérée en passant devant des ports d'admission ou d'échappement ou de passer devant un module d'allumage. Cette configuration alimentée par un système de lumières présente une étanchéité perfectible.

Pour remédier à ces inconvénients, on a proposé dans le document WO-2014/020275-A1 une chambre de combustion CVC comportant des vannes sphériques comportant des rotors sphériques montés rotatifs autour d'axes perpendiculaires à l'axe de la chambre et combinés avec des enveloppes sphériques de ces rotors, lesdits rotors et lesdites enveloppes comportant des canaux et des lumières aptes à être alignés les uns avec les autres et avec des canaux d'entrée de sortie de la chambre de combustion pour déterminer sélectivement l'ouverture ou la fermeture des vannes d'admission et d'échappement correspondantes. Chaque chambre comporte une vanne sphérique à chacune de ses extrémités, et lesdites vannes sont synchronisées l'une avec l'autre afin de mettre en œuvre les trois phases successives du cycle de Humphrey.

Dans cette solution, la conception des vannes d'admission et d'échappement est grandement améliorée, notamment en termes d'étanchéité, mais présente néanmoins de nombreux inconvénients. En premier lieu, les mouvements des rotors sphériques dans les enveloppes provoquent de nombreux frottements, préjudiciables à la longévité de telles vannes. En deuxième lieu, les vannes sont délicates à fabriquer, du fait de la forme sphérique de leurs éléments. En troisième lieu, dans cette conception, les vannes demeurent indépendantes et doivent être synchronisées, et de ce fait la complexité de la chambre de combustion n'est pas améliorée. En quatrième et dernier lieu, chaque chambre nécessite une vanne d'admission et une vanne d'échappement qui lui sont propres, de sorte qu'une turbomachine comportant plusieurs chambres comporte autant de vannes d'admission et de vannes d'échappement que de chambres.

On a aussi proposé dans le document DE-10.347.588-A1 une turbomachine comportant un compresseur et une turbine reliés par un arbre commun, et une chambre de combustion CVC unique qui est agencée sur la périphérie de la turbomachine autour de l'arbre et entre le compresseur et la turbine. La chambre CVC est susceptible d'admettre des gaz d'admission par l'intermédiaire d'une soupape rotative admission et d'évacuer les gaz d'échappement vers la turbine par l'intermédiaire d'une soupape rotative d'échappement. Les soupapes rotatives d'admission et d'échappement sont constituées chacune de deux anneaux concentriques pourvus d'aubages, les aubages des deux anneaux étant espacés selon le même espacement angulaire. Les aubages de chaque anneau délimitent ainsi une pluralité de passages qui sont disposés chacun entre deux aubes consécutives de l'anneau. Les aubages de chaque anneau intérieur sont ainsi susceptibles d'obturer ou de libérer le passage entre deux aubages de l'anneau extérieur correspondant, selon que les aubes de l'anneau intérieur obturent les passages entre les aubes de l'anneau extérieur, ou qu'elles sont alignées avec les aubes de l'anneau extérieur et libèrent ainsi les passages entre les aubes de l'anneau extérieur. Par ailleurs les aubes de chaque anneau intérieur prolongent aérodynamiquement celles de l'anneau extérieur dans une position d'alignement des aubes correspondant à la pleine ouverture de la soupape rotative.

Dans cette solution, l'étanchéité proposée par les soupapes rotatives est imparfaite car, dans la position fermée de la soupape, les aubes de chaque anneau intérieur ne peuvent recouvrir angulairement celles de l'anneau extérieur correspondant sous peine de ne plus prolonger qu'imparfaitement les aubes de l'anneau extérieure dans la position d'alignement des aubes correspondant à la position ouverte de la soupape, et de constituer ainsi un obstacle à l'écoulement des gaz. L'étanchéité à la jonction des bords des aubes de l'anneau intérieur et des bords des aubes de l'anneau intérieur n'est donc réellement effectuée qu'au bord desdites aubes, suivant une ligne d'étanchéité extrêmement ténue, et est donc par conséquent précaire.

Par ailleurs, les aubes des anneaux étant réparties angulairement de manière régulière suivant toute la périphérie de ces anneaux, cette solution ne peut être appliquée qu'à une chambre CVC unique et périphérique, car une division en plusieurs chambres discrètes conduirait à avoir des secteurs angulaires des anneaux, même réduits, qui seraient situés entre deux chambres et qui ne permettraient plus de passage de gaz dans cette zone, induisant alors à l'admission des refoulement des gaz d'admission ou tout le moins des perturbations de l'écoulement de ces gaz.

### EXPOSÉ DE L'INVENTION

L'invention a donc pour but de remédier aux inconvénients mentionnés ci-dessus, relatifs aux réalisations de l'art antérieur.

Dans ce but, l'invention propose de manière générale une chambre de combustion de turbomachine d'aéronef du type à combustion à volume constant, comportant de préférence des chambres réparties selon une structure rayonnante, notamment en barillet, et fonctionnant selon des cycles déphasés, afin d'assurer une alimentation homogène d'au moins une turbine de turbomachine agencée en aval des chambres. En complément de cette architecture, l'invention propose de manière générale une vanne d'admission commune à toutes les chambres et une vanne d'échappement commune à toutes les chambres.

Pour ce faire, l'invention propose un module de combustion de turbomachine, notamment d'aéronef, selon la revendication 1.

Selon d'autres caractéristiques du module :
- les vannes rotatives d'admission / d'échappement sont synchronisées en rotation l'une à l'autre,
- chaque chambre de combustion est agencée coaxialement autour de l'extrémité d'un élément interne tubulaire de carter comportant un conduit de section annulaire, le conduit comportant une extrémité débouchant dans la périphérie dudit élément interne tubulaire, qui est agencée en regard de l'ouverture de la paroi intérieure de la chambre, la vanne rotative interne étant interposée radialement entre ledit élément interne tubulaire de carter et la paroi intérieure de la chambre de combustion,

- la chambre de combustion est agencée coaxialement à l'intérieur d'un élément externe tubulaire de carter comportant un conduit annulaire, la vanne rotative externe étant agencée autour de la paroi extérieure de chaque chambre de combustion dans ledit conduit annulaire de l'élément externe tubulaire de carter,
- le port d'admission est associé à la paroi extérieure de chaque chambre de combustion, les gaz d'admission étant acheminés par le conduit annulaire de l'élément externe tubulaire de carter, et le port d'échappement est associé à la paroi intérieure de chaque chambre de combustion, les gaz d'admission étant évacués par le conduit de l'élément interne tubulaire de carter,
- le module de combustion comporte un élément obturateur commun qui comporte les vannes rotatives d'admission / d'échappement liées mutuellement à rotation.

L'invention concerne aussi une turbomachine comportant un module de compresseur, comportant au moins un compresseur, et un module de turbine, comportant au moins une turbine, ladite turbomachine comportant un module de combustion du type décrit précédemment qui est alimenté par le module de compresseur et qui alimente le module de turbine.

Par exemple, dans un mode de réalisation particulièrement avantageux et simple, la turbomachine comporte un système d'arbres qui lie le module de compresseur au module de turbine. Le module de compresseur alimente le module de combustion par l'intermédiaire d'un conduit d'admission unique, lequel module de combustion alimente le module de turbine par l'intermédiaire d'un conduit d'échappement unique, et au moins un arbre du système d'arbres forme le moyen d'entraînement de l'élément obturateur commun.

En variante, dans un autre mode de réalisation particulièrement avantageux car permettant une grande possibilité d'optimisation de contrôle de la combustion, ladite turbomachine comporte un module de combustion qui est alimenté par le module de compresseur et qui alimente le module de turbine, ledit module de combustion comportant une vanne d'admission et une vanne d'échappement qui peuvent être déphasées de manière active en fonction des différentes phases de fonctionnement de la turbomachine. Ainsi, les vannes peuvent être mues par un moyen d'entraînement commun et être embrayées l'une à l'autre, ou être débrayées ou déphasées de manière sélective, mais elles peuvent également être entraînées indépendamment l'une de l'autre tout en étant sélectivement synchronisées, désynchronisées ou déphasées l'une par rapport à l'autre.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue en perspective coupée par un plan axial d'un principe de réalisation d'un module de combustion ;
- la figure 2 est une vue schématique en coupe axiale du module de combustion de la figure 1 ;
- la figure 3 est une vue schématique en coupe transversale du module de combustion de la figure 2 ;
- la figure 4 est une vue en perspective d'un premier exemple d'un module de combustion ;
- la figure 5 est une vue schématique en coupe transversale du module de combustion de la figure 4 ;
- la figure 6 est une vue en perspective avec arrachement d'une turbomachine comportant un module de combustion selon un deuxième exemple ;
- la figure 7 est une vue schématique en coupe axiale de la turbomachine de la figure 6 ;
- la figure 8 est une vue en coupe transversale d'un mode de réalisation d'un module de combustion selon l'invention ;
- la figure 9 est une vue en coupe axiale du module de combustion de la figure 8 et d'un carter d'une turbomachine associée ;
- les figures 10 à 14 sont des vues schématiques de différentes architectures de turbomachines mettant en œuvre un module de combustion selon l'invention.

Dans la description qui va suivre, des chiffres de référence identiques désignent des pièces identiques ou ayant des fonctions similaires.

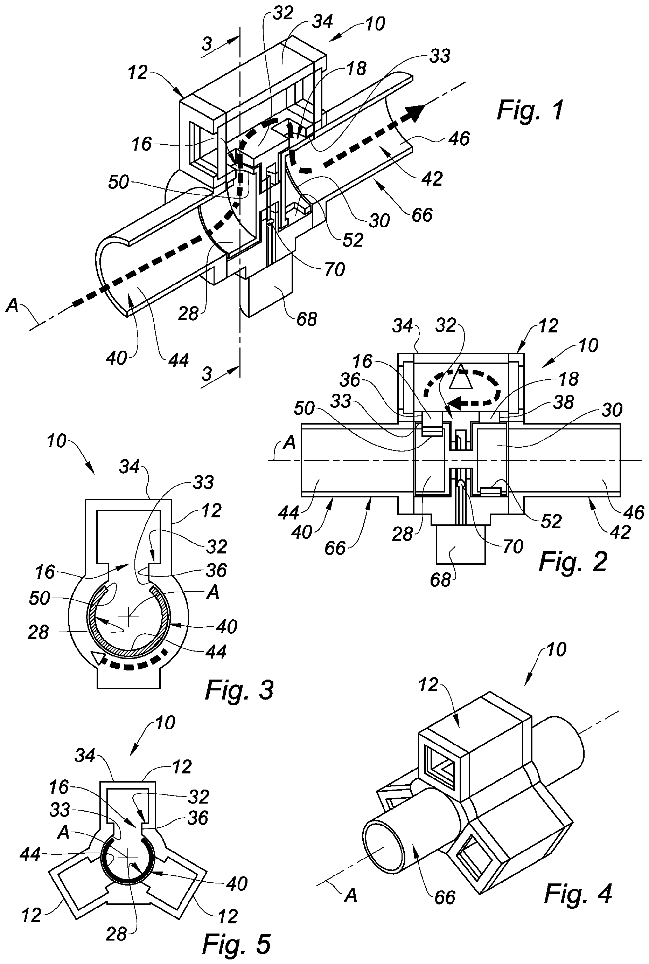

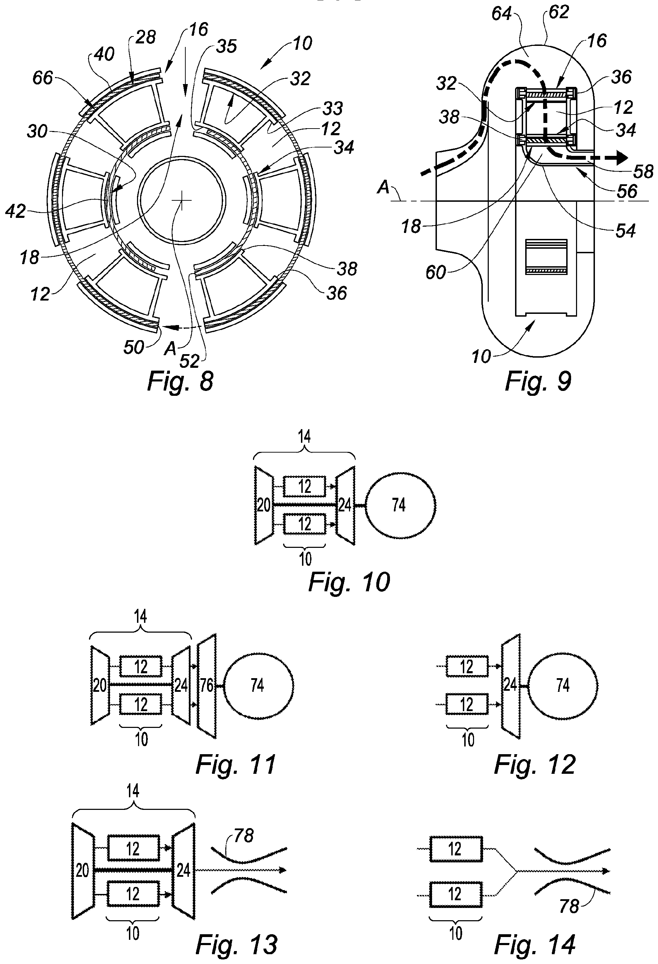

On a représenté aux figures 1 à 5 et à la figure 8 un module de combustion 10. De manière connue, le module 10 est configuré pour mettre en oeuvre une combustion à volume constant se déroulant selon le cycle de Humphrey, c'est-à-dire comportant un temps de combustion, un temps d'échappement, et un temps d'admission d'air frais et de balayage des gaz brûlés.

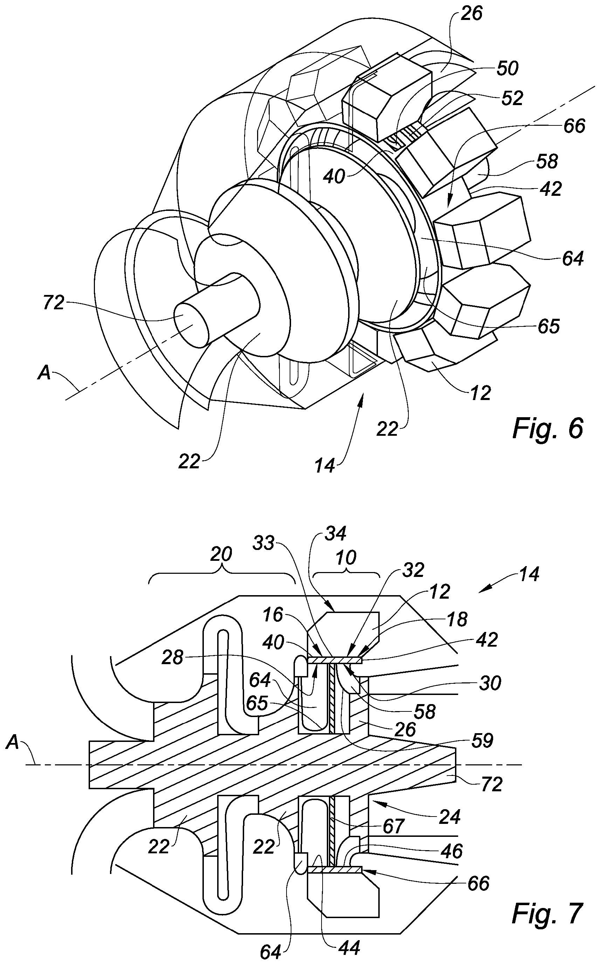

De manière connue le module 10 comporte une pluralité de chambres 12 de combustion agencées autour d'un axe "A", dont une seule a été représentée sur les figures 1 à 3 pour en simplifier la compréhension. Une configuration comportant plusieurs chambres 12 a été représentée à la figure 6, qui représente une turbomachine 14 comportant dix chambres 12 de combustion agencées autour de l'axe "A" de la turbomachine. De manière non limitative de l'invention, l'axe "A" peut par exemple coïncider avec un axe de rotation de la turbomachine.

Comme l'illustrent les figures 1 et 2, chaque chambre 12 comprend un port 16 d'admission de gaz comprimé et un port 18 d'échappement des gaz brûlés. Dans une turbomachine du type de celle qui a été représentée aux figures 6 et 7, le port 16 d'admission de gaz comprimé est alimenté par un module de compresseur 20 de la turbomachine 14 comprenant au moins un compresseur 22, et le port 18 d'échappement de gaz alimente au moins un module de turbine 24 comprenant au moins une turbine 26.

Conformément à l'invention, chaque port d'admission 16 ou port d'échappement 18 est configuré pour être ouvert ou fermé par une vanne rotative d'admission 28 ou par une vanne d'échappement 30 correspondante, coaxiale à l'axe A de la turbomachine 14.

Pour la compréhension de l'invention, le module 10 qui a été représenté aux figures 1 à 3 ne comporte qu'une chambre 12 de combustion. Toutefois, dans le mode de réalisation préféré de l'invention, le module 10 comporte au moins deux chambres 12 de combustion réparties angulairement de manière régulière autour de l'axe A, dont les ports d'admission 16 sont configurés pour être ouverts ou fermés par une vanne rotative commune d'admission 28 et dont les ports d'échappement 18 sont configurés pour être ouverts ou fermés par une vanne rotative commune d'échappement 30. La vanne d'admission 28 et la vanne d'échappement 30 peuvent tourner ensemble ou peuvent être des pièces pouvant tourner différemment.

Sur la figure 5, on a représenté à titre d'exemple un premier exemple d'un module 10 comportant une vanne rotative 28 commune d'admission qui alimente les trois ports d'admission 16 des trois chambres 12 de combustion du même module 10.

De même, à la figure 6 on a représenté un second exemple du module 10 comportant une vanne rotative 28 commune d'admission qui alimente les ports d'admission de dix chambres 12 de combustion d'un même module 10 et une vanne rotative 30 d'échappement qui est alimentée par les dix ports d'échappement des dix chambres 12 de combustion dudit module 10.

Cette configuration est particulièrement avantageuse, car elle permet d'alimenter plusieurs chambres 12 avec une seule vanne d'admission 28 et d'en évacuer les gaz avec une seule vanne d'échappement 30, ce qui permet de simplifier considérablement l'architecture d'une turbomachine comportant un tel module de combustion 10 par rapport aux conceptions précédemment connues de l'état de la technique.

Les chambres 12 de combustion sont réparties angulairement de manière régulière autour de l'axe A, et présentent chacune une direction orientée de préférence suivant une direction sensiblement axiale, de manière à former une structure en forme de barillet. Toutefois, cette configuration n'est pas limitative de l'invention, et les chambres pourraient être agencées selon une autre orientation. Par exemple, les chambres pourraient être également réparties angulairement de manière régulière autour de l'axe A, mais présenter chacune une direction orientée de préférence suivant une direction sensiblement radiale, de manière à former une structure en forme d'étoile. Ainsi il sera compris qu'une caractéristique principale de l'invention est que les chambres 12 puissent être disposées de manière rayonnante.

De préférence également, les cycles de combustion des chambres 12 sont décalés suivant un décalage dépendant du nombre de chambres 12. Ceci permet de lisser le flux des gaz d'échappement fournis au module de turbine 24, en lissant les phénomènes de pulsation inhérents aux cycles de combustion à volume constant. En effet, si toutes les chambres 12 fonctionnaient simultanément suivant les mêmes temps du cycle de Humphrey, les phases d'échappement seraient toutes simultanées et il en résulterait un débit de gaz d'échappement irrégulier, car soumis à la pulsation simultanée des gaz provenant des chambres 12. Au contraire, un module de combustion 10 comportant des cycles de chambres 12 décalés permet de lisser ces pulsations. On remarquera que l'admission en gaz d'échappement du module de turbine 24 sera d'autant plus homogène et exempte de pulsations que le nombre de chambres 12 sera élevé.

Ainsi, de préférence, un module de combustion comportant un nombre déterminé "n" de chambres 12 verra-t-il les cycles de ses chambres décalés. Pour un nombre de "n" chambres, on sera amené à faire fonctionner un nombre de chambres inférieur à la moitié "n/2" du nombre "n" de chambres en même temps pour équilibrer les charges sur les vannes rotatives. En particulier, deux chambres opposées seront sur une même phase de cycle en considérant par exemple pour quatre chambres à un instant déterminé deux chambres en combustion et deux chambres sans combustion.

Dans le mode de réalisation préféré de l'invention, les vannes rotatives d'admission 28 et d'échappement 30 sont synchronisées en rotation l'une à l'autre, en tournant à la même vitesse de rotation.

Cette synchronisation peut être réalisée par tout moyen connu de l'état de la technique, notamment de manière mécanique.

Il convient de noter qu'il est possible de prévoir un dispositif de déphasage réglable entre les vannes rotatives d'admission 28 et d'échappement 30, afin par exemple de pouvoir modifier le déphasage des vannes rotatives d'admission 28 et d'échappement 30 en fonction des conditions d'exploitation du module 12 de combustion, les vannes rotatives d'admission 28 et d'échappement 30, une fois en régime établi, demeurant synchronisées en rotation l'une à l'autre.

On va à présent décrire un mode de réalisation préféré des chambres 12 et des vannes 28, 30.

Selon l'invention, chaque chambre 12 de combustion comporte au moins une paroi 32, 34 comportant une surface 33, 35 en tronçon de cylindre coaxiale à l'axe A.

Dans les premier et deuxième exemples précédemment décrits, les chambres 12 comportent une première paroi longitudinale 32 comportant une surface 33 en tronçon de cylindre, tournée vers l'axe A, c'est à dire une paroi 32 intérieure, qui comporte les deux ports d'admission 16 et d'échappement 18, et accessoirement une deuxième paroi longitudinale 34, tournée à l'opposé de l'axe A, c'est-à-dire une paroi extérieure 34, qui est dépourvue de ports d'admission ou d'échappement.

Dans le mode de réalisation qui a été représenté aux figures 8 et 9, chaque chambre 12 de combustion comporte, s'étendant longitudinalement, une première paroi 32 extérieure, coaxiale à l'axe A et comportant au moins une surface 33 en tronçon de cylindre tournée à l'opposé dudit axe A, c'est-à-dire vers l'extérieur, et qui comporte le port d'admission 16, et une deuxième paroi 34 intérieure, s'étendant longitudinalement, et comportant au moins une surface 35 en tronçon de cylindre, coaxiale à l'axe A et tournée vers l'axe A, c'est-à-dire vers l'intérieur, et qui comporte le port d'échappement 18.

Il sera compris que d'autres configurations sont possibles sans changer la nature de l'invention, par exemple une configuration selon laquelle les ports d'admission 16 et d'échappement 18 seraient disposés sur une paroi coaxiale à l'axe A et tournée à l'opposé dudit axe A, ou une configuration sensiblement inverse du troisième mode de réalisation.

Chaque port 16, 18 comporte, selon la configuration choisie, une ouverture radiale 36, 38 qui est formée dans la paroi longitudinale correspondante 32, 34 de la chambre de combustion dont la surface 33 et/ou 35 en tronçon de cylindre est coaxiale à l'axe A. Chaque vanne rotative d'admission 28 / d'échappement 30 comporte un élément tubulaire 40, 42 correspondant, de diamètre correspondant audit tronçon de cylindre, qui est monté tournant coaxialement dans le tronçon de cylindre ou autour du tronçon de cylindre de la surface 33 et/ou 35 de la paroi respective 32, 34. Cet élément tubulaire 40, 42 comporte un alésage délimitant un conduit 44, 46 de gaz d'admission / d'échappement qui s'étend axialement jusqu'au droit de la chambre de combustion 12, et il comporte au moins une lumière radiale 50, 52, débouchant respectivement dans le conduit 44, 46 et agencée sensiblement dans un plan axial de l'ouverture radiale 36, 38 dudit port 16, 18, qui est apte à permettre la libération ou l'obturation de ladite ouverture radiale 36, 38 lors de la rotation dudit élément tubulaire 40, 42, selon que lumière radiale 50, 52, entraînée en rotation avec l'élément tubulaire 40, 42 passe ou non devant l'ouverture radiale 36, 38 dudit port 16, 18.

Ainsi, dans la représentation de principe et les premier et deuxième exemples qui ont été représentés aux figures 1 à 7, la surface 33 en tronçon de cylindre de la paroi 32 de la chambre de combustion 12 est tournée vers l'axe A, et l'élément tubulaire 40, 42 de chaque vanne 28, 30 est monté tournant intérieurement à cette surface 33. Chaque élément tubulaire 40 ou 42 comporte un alésage interne 44, 46 délimitant le conduit de gaz d'admission / d'échappement, qui est donc formé dans l'élément tubulaire 40, 42, et qui permet l'acheminement des gaz d'admission et l'évacuation des gaz d'échappement selon le sens du flux de ces gaz, comme il a été représenté par la flèche de la figure 1.

Dans le cas particulier du deuxième exemple qui a été représenté aux figures 6 et 7, chaque élément tubulaire 40, 42 est annulaire et il délimite un alésage interne correspondant 44, 46. L'alésage 44 de l'élément tubulaire 40 est configuré pour entourer un conduit d'amenée des gaz 64 issus du compresseur 22, et de la même façon l'alésage 46 de l'élément tubulaire 42 entoure un conduit d'échappement des gaz 58 la turbine 26. En particulier, le conduit d'amenée des gaz peut être délimité à proximité de la chambre 12 de combustion par un guide annulaire d'admission 65 et le conduit d'échappement des gaz peut être délimité à proximité de la chambre 12 de combustion par un guide annulaire d'échappement 59.

Dans le mode de réalisation qui a été représenté aux figures 8 et 9, chaque chambre de combustion 12 comporte deux parois respectivement extérieure 32 et intérieure 34 opposées qui comportent au moins des surfaces respectives extérieure 33 et intérieure 35 conformées en tronçons de cylindre. Les parois 32, 34 comportent chacune un port 16, 18 comportant une ouverture radiale 36, 38 formée dans ladite paroi extérieure 32 ou intérieure 34. Le module de combustion 10 comporte une vanne rotative tubulaire extérieure 28 et une vanne rotative tubulaire intérieure 30, associée à chaque paroi extérieure 32 et extérieure 34 de la chambre 12 de combustion, qui comportent chacune un élément tubulaire respectif 40, 42 de diamètre correspondant à ladite paroi extérieure ou intérieure et qui est monté tournant coaxialement à la surface extérieure 33 ou intérieure 35 en tronçon de cylindre correspondante. Chaque élément tubulaire 40, 42 comporte au moins une lumière 50, 52 agencée sensiblement dans un plan axial de l'ouverture radiale 36, 38 du port 16, 18, qui est apte à obturer ou libérer ladite ouverture radiale 36, 38 lors de la rotation dudit élément tubulaire 40, 42.

Ainsi, la différence principale entre, d'une part, les premier et deuxième exemples, et le mode de réalisation d'autre part, est que dans les premier et deuxième exemples les éléments tubulaires 40, 42 constituant les vannes 28, 30 coopèrent avec une même paroi 32 dont ils libèrent ou obturent les ports 16, 18 décalés axialement, alors que dans le mode de réalisation de l'invention les éléments tubulaires 40, 42 coopèrent avec deux parois 32, 34 décalées radialement dont ils libèrent ou obturent les ports 16, 18, ces ports 16, 18 étant au moins décalés radialement.

On remarquera que dans le mode de réalisation, les ports 16, 18 peuvent aussi être décalés axialement, sans que cela soit limitatif de l'invention.

Comme l'illustre la figure 9, dans le mode de réalisation de l'invention, chaque chambre de combustion 12 est agencée coaxialement autour de l'extrémité 54 d'un élément interne tubulaire de carter 56 comportant un conduit 58 de section annulaire. Le conduit 58 comporte une extrémité 60, qui débouche dans la périphérie dudit élément interne tubulaire 56, qui est agencée en regard de l'ouverture 38 de la paroi intérieure 34 de la chambre 12, et la vanne rotative interne 30 est interposée radialement entre ledit élément 56 interne tubulaire de carter et la paroi intérieure 34 de la chambre 12 de combustion.

D'une manière analogue, la chambre de combustion 12 est agencée coaxialement à l'intérieur d'un élément externe tubulaire de carter 62 comportant un conduit annulaire 64, et la vanne rotative externe 28 est agencée autour de la paroi extérieure 32 des chambres 12 de combustion à l'intérieur dudit conduit annulaire 64 de l'élément 62 externe tubulaire de carter.

De préférence, dans ce mode de réalisation de l'invention, le port d'admission 16 est associé à la paroi extérieure 32 des chambres 12 de combustion, les gaz d'admission étant alors acheminés par le conduit annulaire 64 de l'élément externe 62 tubulaire de carter, et de manière correspondante le port d'échappement 30 est associé à la paroi intérieure 34 des chambres de combustion 12, les gaz d'admission étant alors évacués par le conduit 58 de l'élément interne 56 tubulaire de carter.

Il sera compris que cette configuration n'est pas limitative de l'invention et pourrait être inversée. Par ailleurs, par exemple, l'admission et l'échappement pourraient être axialement décalés, moyennant une longueur supérieure de la chambre de combustion.

Une caractéristique particulièrement avantageuse de l'invention est que le module de combustion 10 peut comporter un élément obturateur commun 66 qui comporte les vannes rotatives d'admission 28 et d'échappement 30 et qui est mû par exemple par un unique moyen d'entraînement, les vannes étant donc liées mutuellement à rotation. Cette configuration permet de réaliser de manière très simple la synchronisation des vannes d'admission 28 et d'échappement 30. Toutefois, cette configuration n'est pas limitative de l'invention et les vannes rotatives d'admission 28 et d'échappement 30 peuvent être mues par des moyens d'entraînement différents mais synchronisés.

Par exemple, dans le cas particulier du deuxième exemple qui a été représenté aux figures 6 et 7, l'élément obturateur 66 est conformé sous la forme d'une roue comportant un flasque 67 en forme de disque auquel sont accolés de part et d'autre les deux éléments tubulaires 40, 42.

L'entraînement de cet élément obturateur 66 peut être réalisé de différentes manières. Par exemple, l'élément obturateur 66 peut être entraîné par un moteur 68 et un accouplement par engrenage à renvoi d'angle 70, comme représenté à la figure 1, mais plus simplement, l'élément obturateur 66 peut être accouplé à un système d'arbres de la turbomachine associée par l'intermédiaire d'une réduction appropriée.

En variante, les vannes d'admission 28 et d'échappement 30 peuvent naturellement être entraînées par des moyens d'entraînements distincts, par exemple synchronisés.

L'invention trouve donc naturellement à s'appliquer à une turbomachine utilisée dans la propulsion aéronautique, comportant un module de compresseur 20 comportant au moins un compresseur 22 et un module 24 de turbine comportant au moins une turbine 26. Une telle turbomachine comporte un module 10 de combustion du type décrit précédemment, alimenté par le module 20 de compresseur et alimentant le module 24 de turbine.

Un exemple d'une telle turbomachine 14, comme représenté aux figures 6 et 7, comporte par exemple comme on l'a vu précédemment un module 20 de compresseur comportant au moins un compresseur 22, un module de combustion 10 du type décrit précédemment, et un module 24 de turbine comportant au moins une turbine 26. Dans cette configuration, le module 22 est lié au module de turbine 24 par un système d'arbres 72.

Dans cette configuration, comme représenté aux figures 6 et 7, le module de compresseur 22 alimente en gaz d'admission le module 10 de combustion par exemple par l'intermédiaire d'un conduit d'admission unique, le module de combustion 10 alimente le module de turbine 24 en gaz d'échappement par l'intermédiaire par exemple d'un conduit d'échappement 58, et au moins un arbre du système d'arbres 22 forme le moyen d'entraînement de l'élément obturateur commun 66.

En variante, dans un autre mode de réalisation particulièrement avantageux qui permettrait une grande possibilité d'optimisation de contrôle de la combustion, ladite turbomachine pourrait comporter un module de combustion comportant une vanne d'admission et une vanne d'échappement 10 qui pourraient être déphasées de manière active en fonction des différentes phases de fonctionnement de la turbomachine. Ainsi, les vannes pourraient être mues par un moyen d'entraînement commun et être embrayées l'une à l'autre, ou débrayées ou déphasées de manière sélective, mais elles pourraient également être entraînées indépendamment l'une de l'autre tout en étant sélectivement synchronisées, désynchronisées ou déphasées l'une à l'autre.

L'invention permet donc de réaliser de manière simple et fiable l'admission et l'échappement des chambres 12 d'un module 10 de combustion de type à volume constant.

Les figures 10 à 14 illustrent différentes possibilités d'application à différents types de systèmes propulsifs.

La figure 10 représente un premier type de système dans lequel une turbomachine 14 entraîne directement ou via un réducteur une charge 74, comme par exemple une hélice de turbopropulseur. Dans ce cas le module de turbine 24 est directement accouplé à la charge 74.

La figure 11 représente un deuxième type de système dans lequel une turbomachine 14 entraîne une turbine libre 76, qui entraîne à son tour directement une charge 74, comme par exemple une hélice de turbopropulseur. Dans ce cas, les gaz en sortie du module de turbine 24 entraînent la turbine libre 76.

La figure 12 représente un troisième type de système dans lequel un module de combustion 10 entraîne un module de turbine 24, qui entraîne à son tour directement une charge 74, comme par exemple une hélice de turbopropulseur. Dans ce cas, ce sont les gaz en sortie du module de combustion 10 qui entraînent le module de turbine 24.

La figure 13 représente un quatrième type de système dans lequel une turbomachine 14 du type décrit précédemment éjecte des gaz dans une tuyère 78. Dans ce cas la propulsion est assurée par réaction.

Enfin la figure 14 représente un cinquième type de système dans lequel un module de combustion 10 éjecte directement des gaz dans une tuyère 78. Dans ce cas, le système est réduit à sa plus simple expression et est très proche en fonctionnement d'un statoréacteur, à cette différence qu'il présente un nombre plus élevé de chambres de combustion 12 synchronisées dans leurs cycles de fonctionnement. La pression de fonctionnement est alors plus élevée. La propulsion est également assurée par réaction.
L'invention propose donc un nouveau type de système propulsif qui est particulièrement avantageux en ce que, à poussée égale, on a estimé qu'un tel système est susceptible de permettre un gain de consommation de 10% à 20 % par rapport à une turbomachine conventionnelle.

## Revendications

1. Module (10) de combustion de turbomachine, notamment d'aéronef, configuré pour la mise en œuvre d'une combustion à volume constant, comportant au moins une chambre (12) de combustion agencée autour d'un axe (A), ladite chambre (12) comprenant un port (16) d'admission de gaz comprimé et un port (18) d'échappement de gaz brulés, une vanne rotative d'admission (28) / d'échappement (30) correspondante associée respectivement à chaque port d'admission (16) et d'échappement (18), coaxiale audit axe (A), et chaque port d'admission (16) / d'échappement (18) étant configuré pour être ouvert ou fermé par ladite vanne rotative d'admission (28) / d'échappement (30), ledit module comportant une pluralité de chambres (12) de combustion réparties angulairement de manière régulière autour dudit axe (A), dont les ports d'admission (16) sont configurés pour être ouverts ou fermés par une vanne rotative commune d'admission (28) et dont les ports d'échappement (18) sont configurés pour être ouverts ou fermés par une vanne rotative commune d'échappement (30), selon un cycle de Humphrey comportant une phase d'admission d'air frais et de balayage des gaz brûlés, une phase de combustion, et une phase d'échappement,
chaque port (16, 18) comportant une ouverture radiale (36, 38) qui est formée dans une paroi (32, 34) longitudinale de la chambre (12) de combustion comportant une surface en tronçon de cylindre (33, 35) coaxiale à l'axe (A), chaque vanne rotative d'admission (28) / d'échappement (30) comportant un élément tubulaire (40, 42) pour chaque port de d'admission (16) / d'échappement (18) de la chambre, monté tournant coaxialement audit axe (A) et comportant au moins une lumière radiale (50, 52), agencée sensiblement dans un plan axial de l'ouverture radiale (36, 38) dudit port (16, 18), qui est monté tournant dans ladite surface (33, 35) en tronçon de cylindre ou autour de ladite surface (33, 35) en tronçon de cylindre, et qui est apte à obturer ou libérer ladite ouverture radiale (36, 38) lors de la rotation dudit élément tubulaire (40, 42), chaque chambre de combustion (12) comportant deux parois respectivement extérieure (32) et intérieure (34) opposées comportant au moins des surfaces respectives extérieure (33) et intérieure (35) conformées en tronçons de cylindre, **caractérisé en ce que** lesdites parois respectivement extérieure (32) et intérieure (34) comportant chacune l'un desdits ports (16, 18) comportant une ouverture radiale (36, 38) formée dans ladite paroi intérieure (34) ou extérieure (32), et **en ce que** ledit module (10) comporte une vanne rotative tubulaire extérieure (28) / intérieure (30) associée à chaque surface extérieure (33)/ intérieure (35) de la paroi extérieure (32)/ intérieure (34) de la chambre de combustion (12), qui comporte un élément tubulaire (40, 42) de diamètre correspondant à ladite paroi extérieure (32) ou intérieure (34) et monté tournant coaxialement dans ou autour ladite surface extérieure (33)/ intérieure (35) correspondante, ledit élément tubulaire (40, 42) comportant une lumière (50, 52), agencée sensiblement dans un plan axial de l'ouverture radiale dudit port (16, 18), qui est apte à obturer ou libérer ladite ouverture radiale (36, 38) lors de la rotation dudit élément tubulaire (40, 42).

2. Module (10) de combustion selon la revendication précédente, **caractérisé en ce que** les vannes rotatives d'admission (28)/ d'échappement (30) sont synchronisées en rotation l'une à l'autre.

3. Module de combustion (10) selon l'une des revendications 1 ou 2, **caractérisé en ce que** chaque chambre (12) de combustion est agencée coaxialement autour de l'extrémité (54) d'un élément interne tubulaire de carter (56) comportant un conduit (58) de section annulaire, le conduit (58) comportant une extrémité (60) débouchant dans la périphérie dudit élément interne tubulaire (56), qui est agencée en regard de l'ouverture (38) de la paroi intérieure (34) de la chambre (12), la vanne rotative interne (30) étant interposée radialement entre ledit élément interne tubulaire de carter (56) et la paroi intérieure (34) de la chambre de combustion.

4. Module de combustion (10) selon la revendication précédente, **caractérisé en ce que** chaque chambre de combustion (12) est agencée coaxialement à l'intérieur d'un élément externe tubulaire de carter (62) comportant un conduit annulaire (64), la vanne rotative externe (28) étant agencée autour de la paroi extérieure (32) de chaque chambre (12) de combustion dans ledit conduit annulaire (64) de l'élément externe tubulaire de carter.

5. Module de combustion (10) selon la revendication 4, **caractérisé en ce que** le port d'admission (16) est associé à la paroi extérieure (32) de chaque chambre de combustion (12), les gaz d'admission étant acheminés par le conduit annulaire (64) de l'élément externe (62) tubulaire de carter, et **en ce que** le port d'échappement (30) est associé à la paroi intérieure (34) de chaque chambre de combustion (12), les gaz d'admission étant évacués par le conduit (58) de l'élément interne (56) tubulaire de carter.

6. Module (10) de combustion selon l'une des revendications précédentes, **caractérisé en ce qu'**il comporte un élément obturateur commun (66) qui comporte les vannes rotatives d'admission (28) / d'échappement (30) liées mutuellement à rotation.

7. Turbomachine (14) comportant un module (20) de compresseur selon l'une des revendications précédentes, comportant au moins un compresseur (22) et un module (24) de turbine comportant au moins une turbine (26), **caractérisée en ce qu'**elle comporte un module (10) de combustion selon l'une quelconque des revendications précédentes alimenté par le module (20) de compresseur et alimentant le module (24) de turbine.

## Patentansprüche

1. Verbrennungsmodul (10) eines Turbomaschine, insbesondere eines Luftfahrzeugs, das für das Umsetzen einer Verbrennung mit konstantem Volumen konfiguriert ist, das mindestens eine Brennkammer (12) umfasst, die um eine Achse (A) eingerichtet ist, wobei die Kammer (12) einen Druckgaseinlassanschluss (16) und einen Rauchgasauslassanschluss (18), ein entsprechendes Einlassdrehventil (28) / Auslassdrehventil (30), das mit jedem jeweiligen Druckgaseinlassanschluss (16) und Rauchgasauslassanschluss (18) assoziiert ist, koaxial zu der Achse (A) umfasst, und jeder Druckgaseinlassanschluss (16) / Rauchgasauslassanschluss (18) dazu konfiguriert ist, von dem Einlassdrehventil (28) / Auslassdrehventil (30) geöffnet oder geschlossen zu werden, wobei das Modul eine Vielzahl von Brennkammern (12), die winkelig regelmäßig um die Achse (A) verteilt sind, umfasst, deren Einlassanschlüsse (16) dazu konfiguriert sind, von einem gemeinsamen Einlassdrehventil (28) geöffnet oder geschlossen zu werden, und deren Auslassanschlüsse (18) dazu konfiguriert sind, von einem gemeinsamen Auslassdrehventil (30) geöffnet oder geschlossen zu werden, gemäß einem Humphrey-Zyklus, der eine Frischlufteinlass- und Rauchgasspülphase, eine Verbrennungsphase und eine Auslassphase umfasst,
wobei jeder Anschluss (16, 18) eine radiale Öffnung (36, 38) umfasst, die in einer Längswand (32, 34) der Brennkammer (12) gebildet ist, die eine Zylinderabschnittoberfläche (33, 35) koaxial zu der Achse (A) umfasst, wobei jedes Einlassdrehventil (28) / Auslassdrehventil (30) ein röhrenförmiges Element (40, 42) für jeden Einlassanschluss (16) / Auslassanschluss (18) der Kammer umfasst, das koaxial zu der Achse (A) drehend montiert ist und mindestens ein radiales Langloch (50, 52) umfasst, das im Wesentlichen in einer axialen Ebene der radialen Öffnung (36, 38) des Anschlusses (16, 18) eingerichtet ist, das in der Zylinderabschnittoberfläche (33, 35) oder um die Zylinderabschnittoberfläche (33, 35) drehend montiert und dazu geeignet ist, die radiale Öffnung (36, 38) bei der Drehung des röhrenförmigen Elements (40, 42) zu verschließen oder freizugeben,
wobei jede Brennkammer (12) zwei entgegengesetzte Wände, jeweils eine äußere (32) und eine innere (34), umfasst, die mindestens jeweilige äußere (33) und eine innere (35) Oberflächen, die Zylinderabschnitten formangeglichen sind, umfassen, **dadurch gekennzeichnet, dass** die jeweilige Außenwand (32) und Innenwand (34) jeweils einen der Anschlüsse (16, 18) umfassen, die eine radiale Öffnung (36, 38) umfassen, die in der Innenwand (34) oder Außenwand (32) gebildet ist, und dass das Modul (10) ein röhrenförmiges äußeres Drehventil (28) / inneres Drehventil (30) umfasst, das mit jeder Außenoberfläche (33) / Innenoberfläche (35) der Außenwand (32) / Innenwand (34) der Brennkammer (12) assoziiert ist, das ein röhrenförmiges Element (40, 42) mit einem Durchmesser umfasst, der der Außenwand (32) oder Innenwand (34) entspricht und koaxial in oder um die entsprechende Außenoberfläche (33) / Innenoberfläche (35) drehend montiert ist, wobei das röhrenförmige Element (40, 42) ein Langloch (50, 52) umfasst, das im Wesentlichen in einer axialen Ebene der radialen Öffnung des Anschlusses (16, 18) eingerichtet ist, das geeignet ist, die radiale Öffnung (36, 38) bei der Drehung des röhrenförmigen Elements (40, 42) zu verschließen oder freizugeben.

2. Verbrennungsmodul (10) nach dem vorstehenden Anspruch, **dadurch gekennzeichnet, dass** das Einlassdrehventil (28) / Auslassdrehventil (30) in Drehung miteinander synchronisiert sind.

3. Verbrennungsmodul (10) nach einem der Ansprüche 1 oder 2, **dadurch gekennzeichnet, dass** jede Brennkammer (12) koaxial um das Ende (54) eines röhrenförmigen inneren Gehäuseelements (56) eingerichtet ist, das eine Leitung (58) mit ringförmigem Querschnitt umfasst, wobei die Leitung (58) ein Ende (60) umfasst, das in den Umfang des röhrenförmigen inneren Elements (56) mündet, das gegenüber der Öffnung (38) der Innenwand (34) der Kammer (12) eingerichtet ist, wobei das innere Drehventil (30) radial zwischen dem röhrenförmigen inneren Gehäuseelement (56) und der Innenwand (34) der Brennkammer zwischengefügt ist.

4. Verbrennungsmodul (10) nach dem vorstehenden Anspruch, **dadurch gekennzeichnet, dass** jede Brennkammer (12) koaxial in dem Inneren eines röhrenförmigen äußeren Gehäuseelements (62) eingerichtet ist, das eine ringförmige Leitung (64) umfasst, wobei das äußere Drehventil (28) um die Außenwand (32) jeder Brennkammer (12) in der ringförmigen Leitung (64) des röhrenförmigen äußeren Gehäuseelements eingerichtet ist.

5. Verbrennungsmodul (10) nach Anspruch 4, **dadurch gekennzeichnet, dass** der Einlassanschluss (16) mit der Außenwand (32) jeder Brennkammer (12) assoziiert ist, wobei die Einlassgase von der ringförmigen Leitung (64) des ringförmigen äußeren Gehäuseelements (62) befördert werden, und dass der Auslassanschluss (18) mit der Innenwand (34) jeder Brennkammer (12) assoziiert ist, wobei die Einlassgase von der Leitung (58) des röhrenförmigen inneren Gehäuseelements (56) abgeleitet werden.

6. Verbrennungsmodul (10) nach einem der vorstehenden Ansprüche, **dadurch gekennzeichnet, dass** es ein gemeinsames Verschlusselement (66) umfasst, das das Einlassdrehventil (28) / Auslassdrehventil (30), die miteinander in Drehung verbunden sind, umfasst.

7. Turbomaschine (14), der ein Verdichtermodul (20) nach einem der vorstehenden Ansprüche umfasst, das mindestens einen Verdichter (22) und ein Turbinenmodul (24) umfasst, das mindestens eine Turbine (26) umfasst, **dadurch gekennzeichnet, dass** er ein Verbrennungsmodul (10) nach einem der vorstehenden Ansprüche umfasst, das von dem Verdichtermodul (20) gespeist wird und das Turbinenmodul (24) speist.

## Claims

1. Combustion module (10) of a turbine engine, in particular of an aircraft, configured for carrying out constant-volume combustion, comprising at least one combustion chamber (12) arranged around an axis (A), said chamber (12) having an intake port (16) for pressurised gas and an exhaust port (18) for combustion gases, a corresponding rotating intake (28) / exhaust (30) valve which is respectively associated with each intake (16) and exhaust (18) port, coaxial to said axis (A), and each intake (16)/ exhaust (18) port being configured to be opened or closed by said rotating intake (28)/ exhaust (30) valve, said module comprising a plurality of combustion chambers (12) which are angularly distributed in a regular manner around said axis (A), the intake ports (16) of which are configured to be opened or closed by a common rotating intake valve (28) and the exhaust ports (18) of which are configured to be opened or closed by a common rotating exhaust valve (30), according to a Humphrey cycle comprising a phase for the intake of fresh air and for sweeping out combustion gases, a combustion phase, and an exhaust phase,
each port (16, 18) comprising a radial opening (36, 38) which is formed in a longitudinal wall (32, 34) of the combustion chamber (12) having a surface (33, 35) in the form of a cylinder portion, which is coaxial with the axis (A), each rotating intake (28)/ exhaust (30) valve having a tubular element (40, 42) for each intake (16) / exhaust (18) port of the chamber, which is rotatably mounted coaxially with said axis (A) and comprising at least one radial slot (50, 52) which is arranged substantially in an axial plane of the radial opening (36, 38) of said port (16, 18), which is rotatably mounted in said surface (33, 35) in the form of a cylinder portion or around said surface (33, 35) in the form of a cylinder portion, and which is capable of closing or releasing said radial opening (36, 38) during the rotation of said tubular element (40, 42), each combustion chamber (12) comprising two opposing walls which are outer (32) and inner (34) respectively, having at least respective outer (33) and inner (35) surfaces shaped into cylinder portions, **characterised in that** said respective outer (32) and inner (34) walls each have one of said ports (16, 18) having a radial opening (36, 38) formed in said inner (34) or outer (32) wall, and **in that** said module (10) comprises an outer (28) / inner (30) rotating tubular valve associated with each outer (33) / inner (35) surface of the outer (32) / inner (34) wall of the combustion chamber (12), which comprises a tubular element (40, 42) having a diameter corresponding to said outer (32) or inner (34) wall and rotatably mounted coaxially in or around said corresponding outer (33) / inner (35) surface, said tubular element (40, 42) having a slot (50, 52), arranged substantially in an axial plane of the radial opening of said port (16, 18), which is capable of closing or releasing said radial opening (36, 38) during the rotation of said tubular element (40, 42).

2. Combustion module (10) according to the preceding claim, **characterised in that** the rotating intake (28) / exhaust (30) valves are synchronised in rotation with one another.

3. Combustion module (10) according to one of claims 1 or 2, **characterised in that** each combustion chamber (12) is coaxially arranged around the end (54) of an internal tubular case element (56) comprising a duct (58) having an annular cross section, the duct (58) having an end (60) which opens into the periphery of said internal tubular element (56), which is arranged opposite the opening (38) in the inner wall (34) of the chamber (12), the internal rotating valve (30) being radially interposed between said internal tubular case element (56) and the inner wall (34) of the combustion chamber.

4. Combustion module (10) according to the preceding claim, **characterised in that** each combustion chamber (12) is arranged coaxially inside an external tubular case element (62) comprising an annular duct (64), the external rotating valve (28) being arranged around the outer wall (32) of each combustion chamber (12) in said annular duct (64) of the external tubular case element.

5. Combustion module (10) according to claim 4, **characterised in that** the intake port (16) is associated with the outer wall (32) of each combustion chamber (12), the intake gases being routed through the annular duct (64) of the external tubular case element (62), and **in that** the exhaust port (18) is associated with the inner wall (34) of each combustion chamber (12), the intake gases being evacuated through the duct (58) of the internal tubular case element (56).

6. Combustion module (10) according to any of the preceding claims, **characterised in that** it comprises a common closing element (66) which has the intake (28) / exhaust (30) rotating valves which are interconnected for conjoint rotation.

7. Turbine engine (14) comprising a compressor module (20) according to any of the preceding claims, having at least one compressor (22) and a turbine module (24) having at least one turbine (26), **characterised in that** it comprises a combustion module (10) according to any of the preceding claims which is supplied by the compressor module (20) and which supplies the turbine module (24).
